# EUROPÄISCHE PATENTSCHRIFT

(11) **EP 2 917 064 B1**
(45) Veröffentlichungstag und Bekanntmachung des Hinweises auf die Patenterteilung: **18.10.2017**
(21) Anmeldenummer: 13799022.2
(22) Anmeldetag: 29.11.2013
(51) Int. Cl.: B60L 5/28

(54) **NICHT SCHIENENGEBUNDENES FAHRZEUG**
NON-RAIL-BOUND VEHICLE
VÉHICULE NON FERROVIAIRE

(30) Priorität: 13.12.2012 DE 102012223068
(43) Veröffentlichungstag der Anmeldung: 16.09.2015
(73) Patentinhaber: Siemens Aktiengesellschaft, 80333 München (DE)
(72) Erfinder: BÜHS, Florian, 10777 Berlin (DE); FRANCKE, Jürgen, 12524 Berlin (DE); GERSTENBERG, Frank, 10409 Berlin (DE); KEIL, Göran, 12557 Berlin (DE); SCHERERZ, Holger, 15345 Rehfelde (DE)
(86) Internationale Anmeldenummer: PCT/EP2013/075061
(87) Internationale Veröffentlichungsnummer: WO 2014/090598

(56) Entgegenhaltungen:
- DE-A1-102011 076 615
- DE-A1-102011 076 620
- DE-A1-102011 076 623
- US-A1- 2010 121 509

## Beschreibung

Die Erfindung bezieht sich auf ein nicht schienengebundenes Fahrzeug gemäß dem Oberbegriff des Patentanspruches 1.

Ein derartiges Fahrzeug ist beispielsweise aus der Offenlegungsschrift DE 10 2011 076 623 A1 bekannt. Das Fahrzeug weist einen Stromabnehmer zur Einspeisung elektrischer Energie aus einer zweipoligen Oberleitung auf, deren als Hin- und Rückleiter ausgebildete Fahrdrähte jeweils durch mindestens eine Schleifleiste des Stromabnehmers kontaktierbar sind. Der Stromabnehmer weist zwei Tragausleger auf, die jeweils am Fahrzeug und an einer die Schleifleisten tragenden Wippe derart kipp- und schwenkbar angelenkt sind, dass die Wippe sowohl anheb- und absenkbar als auch quer zur Fahrtrichtung bewegbar ist. Hierdurch ist der Stromabnehmer auch bei höheren Fahrgeschwindigkeiten des Fahrzeugs sicher an die Fahrdrähte an- und von diesen abkoppelbar. Außerdem können seitliche Ungenauigkeiten beim Lenken des Fahrzeugs bezüglich der Fahrspur permanent vom Stromabnehmer ausgeglichen werden.

Eine entsprechende Steuerung für den Stromabnehmer ist beispielsweise aus der Offenlegungsschrift DE 10 2011 076 615 A1 bekannt. Das Fahrzeug umfasst mit dem Stromabnehmer gekoppelte Aktormittel zum Verstellen der mindestens einen Schleifleiste, wobei die mindestens eine Schleifleiste waagerecht ausgerichtet und quer zu einer Fahrzeuglängsachse verstellbar ist. Das Fahrzeug umfasst ferner Sensormittel zur Erfassung der Lage des Fahrzeuges relativ zum wenigstens einen Fahrdraht. Des Weiteren umfasst das Fahrzeug eine mit den Sensormitteln und den Aktormitteln verbundene Steuereinrichtung, die dazu ausgebildet ist, die Aktormittel in Abhängigkeit der von den Sensormitteln erfassten Fahrzeuglage derart anzusteuern, dass die mindestens eine Schleifleiste den Kontakt zum wenigstens einen Fahrdraht innerhalb ihres Arbeitsbereiches hält.

Der aus DE 10 2011 076 623 A1 bekannte Stromabnehmer ist fahrzeugseitig zwischen Fahrerkabine und Ladeaufbau des Fahrzeugs angelenkt, wobei die Ausleger vom Anlenkpunkt nach vorne - also in Fahrtrichtung - ausgerichtet sind, um mit dem Ladeaufbau nicht in Bauraumkonkurrenz zu treten. Der bekannte Stromabnehmer ist durch seine begrenzte Baulänge nur bedingt geeignet, einen Schleifkontakt zu Oberleitungen in unterschiedlichen Höhen herzustellen. Bei einer großen Anordnungshöhe der Oberleitung müsste die Baulänge des Gestells des Stromabnehmers so groß gewählt werden, dass der abgesenkte Stromabnehmer in Fahrtrichtung des Fahrzeugs über die Vorderkante der Fahrerkabine hinausragt und damit die Fahrzeuglänge des Fahrzeugs verändert.

Der Erfindung liegt daher die Aufgabe zugrunde, ein nicht schienengebundenes Fahrzeug der eingangs genannten Art bereitzustellen, dessen Stromabnehmer für die Energieeinspeisung aus Oberleitungen einsetzbar ist, die auch in größeren Bauhöhen verlaufen, wobei die gesetzlich vorgegebene Fahrzeuglänge nicht überschritten werden soll.

Die Aufgabe wird gelöst durch ein gattungsgemäßes Fahrzeug mit den im kennzeichnenden Teil des Patentanspruches 1 angegebenen Merkmalen. Demnach stützen sich die unteren Gelenkgruppen auf einer mit einem Fahrzeugrahmen des Fahrzeugs verbundenen Hubvorrichtung ab, mittels welcher der Stromabnehmer zwischen einer unteren Parkposition und einer oberen Betriebsposition vertikal verfahrbar ist. Durch das Zusammenspiel von zwei Bewegungsmechanismen lässt sich der Höhenbereich, in dem zu beschleifende Oberleitungen angeordnet sein können, vergrößern, ohne die Baulänge des Gestells des Stromabnehmers zu vergrößern. In einer unteren Parkposition der Hubvorrichtung kann das abgesenkte Gestell des Stromabnehmers waagerecht knapp über einem Dach der Fahrerkabine angeordnet werden. Je nach Höhe der Oberleitung verfährt die Hubvorrichtung den Stromabnehmer in eine obere Betriebsposition, die in einem vorgebbaren Abstand zur jeweiligen Oberleitung liegt.

In dieser Betriebsposition werden die Tragausleger um eine horizontale Kippachse der unteren Gelenkgruppen aufgerichtet, wodurch die Wippe angehoben wird, bis die Schleifleisten mit definiertem Anpressdruck an den Fahrdrähten der Oberleitung anliegen. Bei höher angeordneten Oberleitungen kann die Betriebsposition durch die Hubvorrichtung einfach angepasst werden. Die Baulänge des Stromabnehmers braucht damit nicht verlängert zu werden, was gewährleistet, dass der abgesenkte Stromabnehmer nicht über die Vorderkante der Fahrerkabine hinausragt.

In einer vorteilhaften Ausführungsform des erfindungsgemäßen Fahrzeugs ist mit den mindestens zwei Tragauslegern jeweils ein Kippantrieb zur Erzeugung der Kippbewegung wirkverbunden. Als Kippantrieb zum Aufstellen des Gestells kommen federmechanische, elektrische oder fluidische Antriebe in Betracht, insbesondere aufgrund ihres geringen Bauraums fluidische Muskeln, deren Längsausdehnung sich bei Druckbeaufschlagung des Arbeitsfluids verkürzt, zum Einsatz.

In einer bevorzugten Ausgestaltung des erfindungsgemäßen Fahrzeugs ist mit den mindestens zwei Tragauslegern jeweils ein Schwenkantrieb zur Erzeugung der Schwenkbewegung direkt wirkverbunden. Im Vergleich zu der aus DE 10 2011 076 623 A1 bekannten Lösung, die die Schwenkbewegung über einen separaten, durch einen Servomotor getriebenen Stellausleger vorsieht, werden hier die Tragausleger direkt angetrieben.

In einer alternativen bevorzugten Ausgestaltung des erfindungsgemäßen Fahrzeugs ist mit mindestens zwei Tragauslegern ein Schwenkantrieb zur Erzeugung der Schwenkbewegung über eine Koppelstange wirkverbunden. Es kann ein Schwenkantrieb für mehrere Tragausleger oder auch je Tragausleger ein eigener Schwenkantrieb vorgesehen sein. Auch hier wird ein Verschwenken eines Stellauslegers vermieden, der die Schwenkbewegung auf die Tragausleger übertragen müsste.

Vorzugsweise ist der Schwenkantrieb des erfindungsgemäßen Fahrzeugs als Torquemotor oder als Getriebemotor oder als fluidischer Aktor, insbesondere als fluidischer Muskel, ausgebildet. Bei Einsatz eines fluidischen Aktors können der erforderliche Bauraum klein ausgeführt und die Kosten erheblich gesenkt werden. Ein als Torquemotor oder als Getriebemotor ausgebildeter Schwenkantrieb ist mit einem elastischen Übertragungselement wie einem Gleitkeilgetriebe oder auch einem Spannungswellengetriebe beziehungsweise einem Wellgetriebe ausgeführt. Diese Antriebsart senkt den Druckluftbedarf signifikant und führt zu einer steiferen Ansteuerung der Tragausleger.

In einer bevorzugten Ausführungsform des erfindungsgemäßen Fahrzeugs weist das Gestell wenigstens einen Stellausleger auf, der derart mit Wippe und Hubvorrichtung gekoppelt ist, dass eine die Schleifleisten enthaltende Betriebsebene der Wippe bei einer Kippbewegung der Trag- und Stellausleger parallel zur Fahrbahnebene ausgerichtet bleibt. Stellausleger und Tragausleger bilden somit eine Parallelogrammführung für die Wippe, deren Schleifleisten beim Anheben und Absenken der Wippe stets in einer zur Fahrbahnebene parallelen Betriebsebene gehalten werden. Hierdurch wird ein kontaktsicheres Beschleifen der Oberleitung gewährleistet. Alternativ kann das Gestell auch ohne Stellausleger auskommen, wobei die Wippe in ihrer Betriebsebene durch den Anpressdruck der Schleifleisten an die Oberleitung selbstführend gehalten wird. Die Funktion des wenigstens einen Stellauslegers kann aber auch durch mindestens einen Seilzug und/oder wenigstens eine Feder erfüllt werden.

In einer vorteilhaften Ausgestaltung des erfindungsgemäßen Fahrzeugs ist die Hubvorrichtung zwischen einer Fahrerkabine und einem Ladeaufbau des Fahrzeugs angeordnet, wobei die Baulänge des Stromabnehmers derart bemessen ist, dass dieser in seiner Parkposition in Fahrtrichtung des Fahrzeugs nicht nach vorne über die Fahrerkabine hinausragt. Hierdurch wird gewährleistet, dass die gesetzlich zugelassene Gesamtlänge des Fahrzeugs durch den Stromabnehmer nicht überschritten wird.

Vorzugsweise ist der Stromabnehmer in seiner Parkposition hinter einem mit der Fahrerkabine verbundenen Windschutz angeordnet. Der Windschutz dient als optische Verkleidung des abgesenkten Stromabnehmers und hat einen positiven Einfluss auf den Treibstoffverbrauch durch günstigere aerodynamische Verhältnisse.

In einer weiteren vorteilhaften Ausführungsform des erfindungsgemäßen Fahrzeugs sind die Schleifleisten für Hin- und Rückleiter der Oberleitung auf einem mechanisch verbundenen aber die Schleifleisten elektrisch voneinander isolierenden Schleifleistenhalter der Wippe befestigt. Hierdurch kann das Gewicht der Wippe bei vergleichbarer Stabilität verringert werden.

Vorzugsweise ist die Wippe über obere Gelenkgruppen mit den mindestens zwei Tragauslegern und gegebenenfalls mit dem wenigstens einen Stellausleger verbunden. Dabei können die Schleifleisten auf lediglich zwei Federgruppen abgestützt werden. Der Drehpunkt der Wippe ist hier gleichzeitig die Befestigung an den Auslegern. Durch diese Funktionszusammenführung werden eine Baugruppe und das entsprechende Gewicht eingespart.

Weitere Vorteile und Eigenschaften des erfindungsgemäßen Fahrzeugs ergeben sich aus nachfolgender Beschreibung eines Ausführungsbeispiels, welches anhand der Zeichnungen näher erläutert wird, in deren
FIG 1 ein erfindungsgemäßes Fahrzeug in Seitenansicht mit angedrahtetem Stromabnehmer und
FIG 2 der Stromabnehmer des Fahrzeugs nach FIG 1 in perspektivischer Darstellung
schematisch veranschaulicht sind.

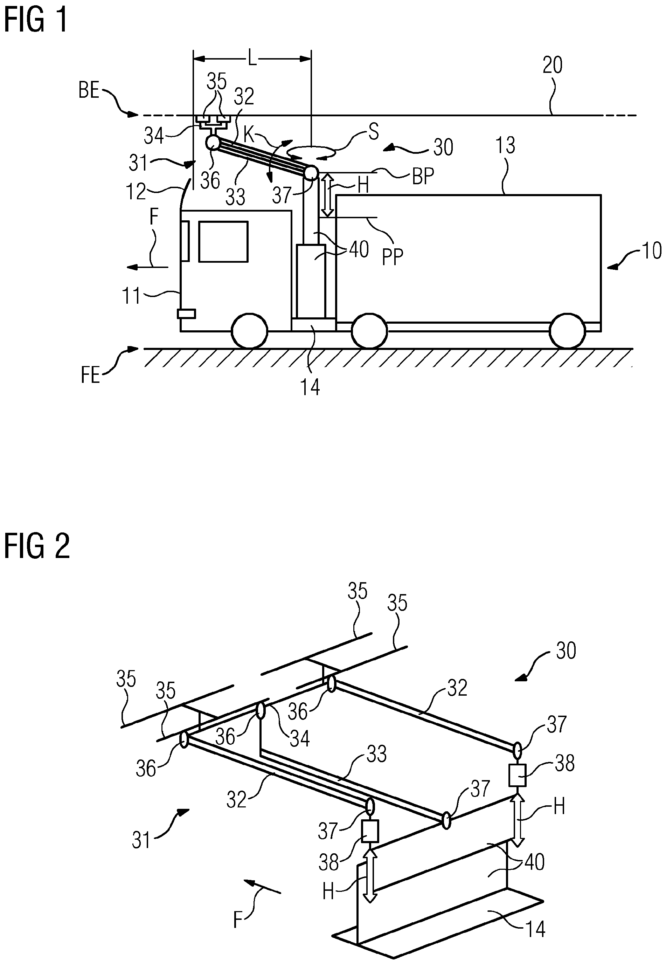

Gemäß FIG 1 weist ein als schweres Lastfahrzeug ausgebildetes, erfindungsgemäßes Fahrzeug 10 eine Fahrerkabine 11 auf, an deren Dachvorderkante ein Windschutz 12 angebracht ist. Ferner weist das Fahrzeug 10 einen Ladeaufbau 13 sowie einen die Fahrerkabine 11 und den Ladeaufbau 13 tragenden Fahrzeugrahmen 14 auf. Das Fahrzeug 10 weist außerdem einen nicht dargestellten, elektrischen oder dieselelektrischen Traktionsantrieb auf. Zur Energieeinspeisung und -versorgung des Traktionsantriebs weist das Fahrzeug 10 einen Stromabnehmer 30 auf, der mit einer zweipoligen Oberleitung 20 eines elek-trifizierten Fahrstreckenabschnittes in Schleifkontakt bringbar ist. Die Oberleitung 20 weist hierzu zwei als Hin- und Rückleiter ausgebildete Fahrdrähte auf, die in an sich bekannter Weise über Masten, Seitenhalter, Tragseile und Hänger streckenseitig installiert sind. Die elektrische Energie innerhalb eines Speiseabschnittes der Oberleitung 20 wird über ein angeschlossenes Unterwerk bereitgestellt.

Auch gemäß FIG 2 weist der Stromabnehmer 30 ein Gestell 31 auf, welches zwei rohrförmige und parallel zueinander angeordnete Tragausleger 32 sowie einen parallel zu diesen verlaufenden Stellausleger 33 umfasst und die im Folgenden gemeinsam als Ausleger 32, 33 bezeichnet werden. Das Gestell 31 trägt an fahrdrahtseitigen Enden der Ausleger 32, 33 eine Wippe 34 mit Schleifleisten 35, die am Gestell 31 über obere Gelenkgruppen 36 angelenkt ist. An fahrzeugseitigen Enden der Ausleger 32, 33 ist das Gestell 31 des Stromabnehmers 30 über untere Gelenkgruppen 37 mit einer Hubvorrichtung 40 verbunden. Die unteren Gelenkgruppen 37 weisen horizontal und senkrecht zu einer Fahrtrichtung F des Fahrzeugs 10 liegende Kippachsen auf, um die die Ausleger 32, 33 eine Kippbewegung K ausführen können, wodurch die Wippe 34 anheb- bzw. absenkbar ist. Die Tragausleger 32 und der Stellausleger 33 bilden dabei eine Parallelogrammführung, die bewirkt, dass die Wippe 34 derart angehoben bzw. abgesenkt wird, dass eine die Schleifleisten 35 enthaltende Betriebsebene BE stets parallel zu einer durch die Fahrbahn definierten Fahrbahnebene FE gehalten wird. Die Kippbewegung K wird dabei durch nicht dargestellte Kippantriebe je Tragausleger 32 bewirkt, die beispielsweise als fluidische Muskeln ausgebildet sind.

Zum Ausgleich von Lenkungenauigkeiten weisen die unteren Gelenkgruppen 37 vertikale Schwenkachsen auf, um die die Ausleger 32, 33 eine Schwenkbewegung S ausführen können. Durch die Schwenkbewegung S des Gestells 31 wird die Wippe 34 des Stromabnehmers 30 quer zur Fahrtrichtung F verstellt. Mit einer an sich beispielsweise aus DE 10 2011 076 615 A1 bekannten Steuerung ist es möglich, den Schleifkontakt der Schleifleisten 35 an die Fahrdrähte der Oberleitung 20 auch bei Lenkungenauigkeiten des Fahrers bezüglich seiner Fahrspur automatisch aufrecht erhalten zu können. Hierzu sind die Tragausleger 32 mit je einem Schwenkantrieb 38 direkt wirkverbunden, die als Torquemotor oder als Getriebemotor oder als fluidischer Aktor ausgeführt sein können.

Erfindungsgemäß stützen sich nun die unteren Gelenkgruppen 37 über eine Hubvorrichtung 40 auf dem Fahrzeugrahmen 14 ab. Die Hubvorrichtung 40 umfasst einen fest mit dem Fahrzeugrahmen verbundenen Teil und einen durch einen nicht dargestellten Hubantrieb vertikal verfahrbaren, beweglichen Teil auf. Durch diese vertikale Hubbewegung H kann der Stromabnehmer 30 zwischen einer unteren Parkposition PP und einer oberen Betriebsposition BP verfahren werden. In der Parkposition PP ist der abgesenkte Stromabnehmer 30 oberhalb eines Daches der Fahrerkabine 11 hinter dem Windschutz 12 angeordnet, wodurch sich aerodynamische Vorteile ergeben, die unmittelbaren Einfluss auf den Treibstoffverbrauch bei der Fahrt auf nicht elektrifizierten Fahrstrecken hat. Je nach Höhe der zu befahrenden Oberleitung 20 kann nun der Stromabnehmer 30 in eine zugeordnete Betriebsposition BP verbracht werden, um dann durch Aufrichten des Gestells 31 einen Schleifkontakt zwischen Schleifleisten 35 der Wippe 34 und Oberleitung 20 herzustellen. Hierdurch kann die Baulänge L des Stromabnehmers 30 in Parkposition PP so kurz ausgeführt werden, dass der Stromabnehmer 30 die Gesamtlänge des Fahrzeugs 10 nicht beeinflusst.

Ein wesentlicher Vorteil des erfindungsgemäßen Stromabnehmers 30 besteht in der deutlich reduzierten bewegten Masse durch die kurzen Ausleger 32, 33 sowie der entsprechend verkürzte Bauraum für den Stromabnehmer 30 am Fahrzeug 10. Darüber hinaus wird eine sichere seitliche Stellbewegung der Wippe 34 durch die Schwenkantriebe 38 an wenigstens zwei Tragauslegern 32 gewährleistet. Durch die geringere Masse können die Antriebsleistungen der Schwenkantriebe 38 reduziert und eine agilere Bewegung erreicht werden. Ferner lässt sich hierdurch die Hubvorrichtung 40 schlank ausführen.

## Patentansprüche

1. Nicht schienengebundenes Fahrzeug (10), insbesondere Lastkraftwagen, mit einem Stromabnehmer (30) zur Einspeisung elektrischer Energie aus einer zweipoligen Oberleitung (20), der ein eine Wippe (34) mit Schleifleisten (35) tragendes Gestell (31) aufweist, das zur Herstellung bzw. Unterbrechung eines elektrischen Schleifkontaktes von Schleifleisten (35) und Oberleitung (20) bewegbar ausgebildet ist, wobei das Gestell (31) mindestens zwei Tragausleger (32) aufweist, an deren fahrdrahtseitigen Enden die Wippe (34) angelenkt ist und deren fahrzeugseitige Enden sich über untere Gelenkgruppen (37) am Fahrzeugrahmen (14) abstützen, wobei die Wippe (31) durch eine Kippbewegung (K) der Tragausleger (32) um horizontale Kippachsen der unteren Gelenkgruppen (37) vertikal anheb- bzw. absenkbar und durch eine Schwenkbewegung (S) der Tragausleger (32) um vertikale Schwenkachsen der unteren Gelenkgruppen (37) seitlich auslenkbar ist, **dadurch gekennzeichnet, dass** sich die unteren Gelenkgruppen (37) auf einer mit einem Fahrzeugrahmen (14) des Fahrzeugs (10) verbundenen Hubvorrichtung (40) abstützen, mittels welcher der Stromabnehmer (30) zwischen einer unteren Parkposition (PP) und einer oberen Betriebsposition (BP) vertikal verfahrbar ist.

2. Fahrzeug (10) nach Anspruch 1, wobei mit den mindestens zwei Tragauslegern (32) jeweils ein Kippantrieb zur Erzeugung der Kippbewegung (K) wirkverbunden ist.

3. Fahrzeug (10) nach einem der Ansprüche 1 oder 2, wobei mit den mindestens zwei Tragauslegern (32) jeweils ein Schwenkantrieb (38) zur Erzeugung der Schwenkbewegung (S) direkt wirkverbunden ist.

4. Fahrzeug (10) nach einem der Ansprüche 1 oder 2, wobei mit den mindestens zwei Tragauslegern (32) ein Schwenkantrieb zur Erzeugung der Schwenkbewegung (S) über eine Koppelstange wirkverbunden ist.

5. Fahrzeug (10) nach Anspruch 3 oder 4, wobei der Schwenkantrieb (38) als Torquemotor oder als Getriebemotor oder als fluidischer Aktor ausgebildet ist.

6. Fahrzeug (10) nach einem der Ansprüche 1 bis 5, wobei das Gestell (31) wenigstens einen Stellausleger (33) aufweist, der derart mit Wippe (34) und Hubvorrichtung (40) gekoppelt ist, dass eine die Schleifleisten (35) enthaltende Betriebsebene (BE) der Wippe (34) bei einer Kippbewegung (K) der Trag- und Stellausleger (32, 33) parallel zur Fahrbahnebene (FE) ausgerichtet bleibt.

7. Fahrzeug (10) nach einem der Ansprüche 1 bis 6, wobei die Hubvorrichtung (40) zwischen einer Fahrerkabine (11) und einem Ladeaufbau (13) des Fahrzeugs (10) angeordnet ist, wobei die Baulänge (L) des Stromabnehmers (30) derart bemessen ist, dass dieser in seiner Parkposition (PP) in Fahrtrichtung (F) des Fahrzeugs (10) nicht nach vorne über die Fahrerkabine (11) hinausragt.

8. Fahrzeug (10) nach Anspruch 7, wobei der Stromabnehmer (30) in seiner Parkposition (PP) hinter einem mit der Fahrerkabine (11) verbundenen Windschutz (12) angeordnet ist.

9. Fahrzeug (10) nach einem der Ansprüche 1 bis 8, wobei die Schleifleisten (35) für Hin- und Rückleiter der Oberleitung (20) auf einem mechanisch verbundenen aber elektrisch isolierenden Schleifleistenhalter der Wippe befestigt sind.

10. Fahrzeug (10) nach einem der Ansprüche 6 bis 9, wobei die Wippe (34) über obere Gelenkgruppen (36) mit den mindestens zwei Tragauslegern (32) und gegebenenfalls mit dem wenigstens einen Stellausleger (33) verbunden ist.

## Claims

1. Non-rail-bound vehicle (10), in particular a truck, with a current collector (30) supplying electric energy from a two-pole overhead conductor (20) having a frame (31) bearing a rocker (34) with contact strips (35) which, to establish or interrupt electric sliding contact between contact strips (35) and overhead conductor (20), is embodied movable, wherein the frame (31) has at least two support extension arms (32) onto the catenary-wire ends of which the rocker (34) is articulated and the vehicle-side ends of which are supported via lower hinge assemblies (37) on the vehicle frame (14), wherein the rocker (31), through a tilting movement (K) of the support extension arms (32) around horizontal tilting axes of the lower hinge assemblies (37), is able to be raised or lowered vertically and, through a pivoting movement (S) of the extension support arms (32) around vertical pivot axes of the lower hinge assemblies (37), is able to be deflected laterally, **characterised in that** the lower hinge assemblies (37) are supported on a lifting device (40) connected to the vehicle frame (14) of the vehicle (10), by means of which the current collector (30) is able to be moved vertically between a lower parked position (PP) and an upper operating position (BP).

2. Vehicle (10) according to claim 1, wherein a tilt drive (38) for creating the tilting movement (K) is effectively connected to the at least two support extension arms (32) in each case.

3. Vehicle (10) according to one of claims 1 or 2, wherein a pivot drive (39) for creating the pivoting movement (S) is directly effectively connected to the at least two support extension arms (32) in each case.

4. Vehicle (10) according to one of claims 1 or 2, wherein a pivot drive for creating the pivot movement (S) is effectively connected via a connecting rod to the at least two extension support arms (32).

5. Vehicle (10) according to claim 3 or 4, wherein the pivot drive (39) is embodied as a torque motor or as a geared motor or as a fluid actuator.

6. Vehicle (10) according to one of claims 1 to 5, wherein the frame (31) has at least one setting arm (33) which is coupled to rocker (34) and lifting device (40) such that an operating plane (BE) of the rocker (34) containing the contact strips (35) remains aligned in parallel to the plane of the road surface (FE) during a tilting movement (K) of the extension support arms and setting arms (32, 33).

7. Vehicle (10) according to one of claims 1 to 6, wherein the lifting device (40) is disposed between a driver's cab (11) and a load area (13) of the vehicle (10), wherein the installed length (L) of the current collector (30) is dimensioned such that said current collector, in its parked position (PP), in the direction of travel (F) of the vehicle (10), does not project forwards beyond the driver's cab (11).

8. Vehicle (10) according to claim 7, wherein the current collector (30), in its parked position (PP), is disposed behind a wind deflector (12) connected to the driver's cab (11).

9. Vehicle (10) according to one of claims 1 to 8, wherein the contact strips (35) for outwards and return conductors of the overhead conductor (20) are fastened to a contact strip holder of the rocker connecting the strips mechanically but insulating them electrically.

10. Vehicle (10) according to one of claims 6 to 9, wherein the rocker (34) is connected via upper hinge assemblies (36) to the at least two extension support arms (32) and possibly to the at least one setting arm (33).

## Revendications

1. Véhicule (10) non ferroviaire, notamment camion, comprenant un appareil (30) de prise de courant pour injecter de l'énergie électrique à partir d'une ligne (20) de contact bipolaire, qui a un bâti (31) qui porte un archet (34) ayant des baguettes (35) de frottement et qui est constitué mobile pour ménager et interrompre un contact électrique de frottement des baguettes (35) de frottement et de la ligne (30) de contact, le bâti (31) ayant au moins deux bras (32) porteurs, aux extrémités desquelles, du côté du fil de contact, est articulé l'archet (34) et dont les extrémités du côté du véhicule s'appuient sur le châssis (14) du véhicule par des groupes (37) d'articulation, l'archet (31) pouvant être soulevé et abaissé verticalement par un mouvement (K) de basculement des bras (32) porteurs autour d'axes de basculement horizontaux des groupes (37) d'articulation inférieurs et pouvant être dévié latéralement par un mouvement (S) de pivotement des bras (32) porteurs autour d'axes de pivotement verticaux des groupes (37) d'articulation inférieurs, **caractérisé en ce que** les groupes (37) d'articulation inférieurs s'appuient sur un dispositif (40) de levage, qui est relié à un châssis (14) du véhicule (10), et au moyen duquel la prise (30) de courant peut se déplacer verticalement entre une position (PP) inférieure de repos et une position (BP) supérieure de service.

2. Véhicule (10) suivant la revendication 1, dans lequel un entraînement en basculement pour produire le mouvement (K) de basculement est relié en action avec les au moins deux bras (32) porteurs.

3. Véhicule (10) suivant l'une des revendications 1 ou 2, dans lequel un entraînement en basculement, pour la production du mouvement (S) de basculement, est relié en action directement avec les au moins deux bras (32) porteurs.

4. Véhicule (10) suivant l'une des revendications 1 ou 2, dans lequel un entraînement en pivotement, pour produire le mouvement (S) de pivotement, est relié en action au au moins deux bras (32) porteurs par une barre d'accouplement.

5. Véhicule (10) suivant la revendication 3 ou 4, dans lequel l'entraînement (38) en pivotement est constitué sous la forme d'un moteur couple ou sous la forme d'un moteur réducteur ou sous la forme d'un actionneur fluidique.

6. Véhicule (10) suivant l'une des revendications 1 à 5, dans lequel le bâti (31) a au moins un bras (33) de réglage, couplé à l'archet (34) et au dispositif (40) de levage, de manière à ce qu'un plan (BE) de fonctionnement, contenant les baguettes (35) de frottement, de l'archet (34) reste, lors d'un mouvement (K) de basculement des bras (32, 33) porteurs et de réglage, parallèle au plan (FE) de la chaussée.

7. Véhicule (10) suivant l'une des revendications 1 à 6, dans lequel le dispositif (40) de levage est disposé entre une cabine (11) de conducteur et une caisse (13) de chargement du véhicule (10), la longueur (L) de la prise (30) de courant étant telle, que celle-ci, dans sa position (PP) de repos, ne va pas, dans le sens (F) de déplacement du véhicule (10), vers l'avant au-delà de la cabine (11) du conducteur.

8. Véhicule (10) suivant la revendication 7, dans lequel la prise (30) de courant est, dans sa position (PP) de repos, disposée derrière un pare-vent (12) relié à la cabine (11) du conducteur.

9. Véhicule (10) suivant l'une des revendications 1 à 8, dans lequel les baguettes (35) de frottement sont, pour un conducteur aller et un conducteur retour de la ligne (20) de contact, fixées à un porte-baguette de frottement, relié mécaniquement mais isolant électriquement, de l'archet.

10. Véhicule (10) suivant l'une des revendications 6 à 9, dans lequel l'archet (34) est relié, par un groupe (36) d'articulation supérieur, au au moins deux bras (32) porteurs et, le cas échéant, au au moins un bras (33) de réglage.
